# EUROPEAN PATENT APPLICATION

(11) **EP 4 600 725 A2**
(43) Date of publication of application: **13.08.2025**
(21) Application number: 24215442.5
(22) Date of filing: 26.11.2024
(51) Int. Cl.: G02F 1/1335

(54) **REFLECTIVE DISPLAY PANEL**

(30) Priority: 06.02.2024 US 202463550571 P; 15.02.2024 US 202463554107 P
(71) Applicant: Hannstar Display Corporation, Taipei City 114762 (TW)
(72) Inventor: CHIAO, Yu-Chi, 114762 Taipei City (TW); CHANG, Shao-Chien, 114762 Taipei City (TW)
(74) Representative: Becker, Eberhard

(57) **Abstract**

A reflective display panel (10, 11, 12, 13, 13A, 13B, 14, 15, 15A, 16, 16A, 16B) including a pixel array substrate (100), a color filter substrate, and a liquid crystal layer (LCL) is provided. The liquid crystal layer (LCL) is disposed between the pixel array substrate (100) and the color filter substrate. The pixel array substrate (100) includes a first pixel electrode, a second pixel electrode and a third pixel electrode. The second pixel electrode and the third pixel electrode are adjacent to at least one side of the first pixel electrode. In a frame period, a voltage polarity of one of the first pixel electrode, the second pixel electrode, and the third pixel electrode is opposite to voltage polarities of the other two of the first pixel electrode, the second pixel electrode, and the third pixel electrode. Three of multiple filter patterns (FP) of the color filter substrate respectively overlapping the first pixel electrode, the second pixel electrode, and the third pixel electrode have different filter colors.

## Description

### BACKGROUND

### Technical Field

The disclosure relates to a display panel, and more particularly, to a reflective display panel.

### Description of Related Art

In order to improve display quality, a dot inversion electrical architecture is adopted for most current reflective display panels to drive a panel. However, this type of design is difficult to significantly improve reflectivity and display contrast of the reflective display panel.

### SUMMARY

The disclosure provides a reflective display panel, which has better reflectivity and display contrast.

A reflective display panel in the disclosure includes a pixel array substrate, a color filter substrate, and a liquid crystal layer. The pixel array substrate is provided with multiple display units. The display unit includes a first pixel electrode, a second pixel electrode, and a third pixel electrode. The second pixel electrode and the third pixel electrode are adjacent to at least one side of the first pixel electrode. In a same frame period of the reflective display panel, a voltage polarity of one of the first pixel electrode, the second pixel electrode, and the third pixel electrode is opposite to voltage polarities of the other two of the first pixel electrode, the second pixel electrode, and the third pixel electrode. The color filter substrate is provided with multiple filter patterns. Three of the filter patterns respectively overlapping the first pixel electrode, the second pixel electrode, and the third pixel electrode of each of the display units have different filter colors from each other. The liquid crystal layer is disposed between the pixel array substrate and the color filter substrate.

In an embodiment of the disclosure, the second pixel electrode and the third pixel electrode of the reflective display panel are respectively adjacent to a first side and a second side of the first pixel electrode. The first side is connected to the second side. The pixel array substrate is further provided with multiple data lines and multiple scan lines. The data lines are arranged along a first direction and extend in a second direction. The first direction is perpendicular to the second direction. The scan lines are arranged along the second direction and extend in the first direction. An extension direction of the first side is parallel to the first direction, an extension direction of the second side is parallel to the second direction. In the same frame period of the reflective display panel, the voltage polarity of the first pixel electrode is the same as the voltage polarity of one of the second pixel electrode and the third pixel electrode, and is opposite to the voltage polarity of the other one of the second pixel electrode and the third pixel electrode.

In an embodiment of the disclosure, the first pixel electrode and the second pixel electrode of the reflective display panel are aligned and arranged along the second direction. The first pixel electrode and the third pixel electrode are aligned and arranged along the first direction.

In an embodiment of the disclosure, the second pixel electrode and the third pixel electrode of the reflective display panel are aligned and arranged along the first direction. The second pixel electrode and the third pixel electrode are each staggered to the first pixel electrode along the second direction, and are both adjacent to one side of the first pixel electrode.

In an embodiment of the disclosure, the second pixel electrode and the third pixel electrode of the reflective display panel are aligned and arranged along the second direction. The second pixel electrode and the third pixel electrode are staggered to the first pixel electrode along the first direction, and are both adjacent to one side of the first pixel electrode.

In an embodiment of the disclosure, the second pixel electrode and the third pixel electrode of the reflective display panel are respectively adjacent to a first side and a second side of the first pixel electrode. The first side is connected to the second side. The pixel array substrate is further provided with multiple data lines and multiple scan lines. The data lines are arranged along a first direction and extend in a second direction. The first direction is perpendicular to the second direction. The scan lines are arranged along the second direction and extend in the first direction. An extension direction of the first side intersects with the first direction, and an extension direction of the second side intersects with the second direction. In the same frame period of the reflective display panel, the voltage polarity of the first pixel electrode is the same as the voltage polarity of one of the second pixel electrode and the third pixel electrode, and is opposite to the voltage polarity of the other one of the second pixel electrode and the third pixel electrode.

In an embodiment of the disclosure, each of the first pixel electrode, the second pixel electrode, and the third pixel electrode of the reflective display panel has a reflective surface, and an outline of the reflective surface is a triangle or a rhombus.

In an embodiment of the disclosure, the first pixel electrode and the second pixel electrode of the reflective display panel are aligned and arranged along the extension direction of the first side, and the first pixel electrode and the third pixel electrode are aligned and arranged along the extension direction of the second side.

In an embodiment of the disclosure, the first pixel electrode and the second pixel electrode of the reflective display panel are aligned and arranged along the extension direction of the second side, and the third pixel electrode is staggered to the first pixel electrode and the second pixel electrode along the extension direction of the first side, and is further adjacent to a third side of the second pixel electrode.

In an embodiment of the disclosure, an area of a reflective surface of one of the first pixel electrode, the second pixel electrode, and the third pixel electrode of the reflective display panel is different from an area of a reflective surface of another one of the first pixel electrode, the second pixel electrode, and the third pixel electrode.

In an embodiment of the disclosure, the second pixel electrode and the third pixel electrode of the reflective display panel are respectively adjacent to a first side and a second side of the first pixel electrode. The first side faces away from the second side. The pixel array substrate is further provided with multiple data lines and multiple scan lines. The data lines are arranged along a first direction and extend in a second direction. The first direction is perpendicular to the second direction. The scan lines are arranged along the second direction and extend in the first direction. Extension directions of each of the first side and the second side are parallel to the first direction or the second direction. In the same frame period of the reflective display panel, the voltage polarity of the first pixel electrode is the same as the voltage polarity of one of the second pixel electrode and the third pixel electrode, and is opposite to the voltage polarity of the other one of the second pixel electrode and the third pixel electrode.

In an embodiment of the disclosure, the second pixel electrode and the third pixel electrode of the reflective display panel are aligned and arranged along a direction perpendicular to the first side and the second side, and are staggered to the first pixel electrode.

In an embodiment of the disclosure, the first pixel electrode, the second pixel electrode, and the third pixel electrode of the reflective display panel are aligned and arranged along a direction perpendicular to the first side and the second side.

In an embodiment of the disclosure, each of the first pixel electrode, the second pixel electrode, and the third pixel electrode of the reflective display panel has multiple sub-electrodes electrically independent of each other.

A reflective display panel in the disclosure includes a pixel array substrate, a color filter substrate, and a liquid crystal layer. The pixel array substrate is provided with multiple display units. Each of the display units includes a first pixel electrode, a second pixel electrode, and a third pixel electrode each having multiple sub-electrodes electrically independent of each other. The second pixel electrode and the third pixel electrode are adjacent to at least one side of the first pixel electrode. The color filter substrate is provided with multiple filter patterns. Three of the filter patterns respectively overlapping the first pixel electrode, the second pixel electrode, and the third pixel electrode of each of the display units have different filter colors from each other. A liquid crystal layer is disposed between the pixel array substrate and the color filter substrate.

In an embodiment of the disclosure, the pixel array substrate of the reflective display panel is further provided with multiple data lines and data lines scan lines. The data lines are arranged along a first direction and extend in a second direction. The first direction is perpendicular to the second direction. The scan lines are arranged along the second direction and extend in the first direction. The display units include a first display unit and a second display unit arranged adjacently along the second direction. The first pixel electrode and the second pixel electrode of each of the display units are aligned and arranged along the first direction. In the second direction, the first pixel electrode and the second pixel electrode of the first display unit are respectively aligned with the first pixel electrode and the second pixel electrode of the second display unit. The third pixel electrode of the first display unit is staggered to the third pixel electrode of the second display unit.

In an embodiment of the disclosure, the pixel array substrate of the reflective display panel is further provided with multiple data lines and multiple scan lines. The data lines are arranged along a first direction and extend in a second direction. The first direction is perpendicular to the second direction. The scan lines are arranged along the second direction and extend in the first direction. The display units include a first display unit and a second display unit arranged adjacently along the first direction. The first pixel electrode and the second pixel electrode of each of the display units are aligned and arranged along the first direction. In the second direction, the second pixel electrode of the first display unit is aligned with the third pixel electrode. The first pixel electrode of the second display unit is aligned with the third pixel electrode.

In an embodiment of the disclosure, an area of a reflective surface of one of the first pixel electrode, the second pixel electrode, and the third pixel electrode of the reflective display panel is different from an area of a reflective surface of another one of the first pixel electrode, the second pixel electrode, and the third pixel electrode.

Based on the above, in the reflective display panel according to an embodiment of the disclosure, two pixel electrodes are adjacent to at least one side of one pixel electrode of each of the display units. In the same frame period, the voltage polarity of one of the three pixel electrodes is opposite to the voltage polarities of the other two. In this way, the distribution densities of the two adjacent pixel electrodes having the opposite voltage polarities may be reduced, thereby reducing the misaligned area of the liquid crystal layer caused by different voltage polarities between the two adjacent pixel electrodes, so as to reduce the dark-state light leakage of the reflective display panel. Therefore, the display contrast and reflectivity of the reflective display panel may be significantly improved. In the reflective display panel according to another embodiment of the disclosure, each of the pixel electrodes in the display unit is formed by the sub-electrodes that are electrically independent of each other. In this way, the number of display color scales of the reflective display panel may be increased, which helps to improve the display contrast thereof.

### BRIEF DESCRIPTION OF THE DRAWINGS

FIG. 1 is a schematic cross-sectional view of a reflective display panel according to the first embodiment of the disclosure.
FIG. 2 is a schematic front view of the reflective display panel according to the first embodiment of the disclosure.
FIG. 3 is a schematic front view of a reflective display panel according to the second embodiment of the disclosure.
FIG. 4 is a schematic front view of a reflective display panel according to the third embodiment of the disclosure.
FIG. 5 is a schematic front view of a reflective display panel according to the fourth embodiment of the disclosure.
FIG. 6 is a schematic front view of a reflective display panel according to the fifth embodiment of the disclosure.
FIG. 7 is a schematic front view of a reflective display panel according to the sixth embodiment of the disclosure.
FIG. 8 is a schematic front view of a reflective display panel according to the seventh embodiment of the disclosure.
FIG. 9 is a schematic front view of a reflective display panel according to an eighth embodiment of the disclosure.
FIG. 10 is a schematic front view of the reflective display panel in FIG. 9 according to another modified embodiment.
FIG. 11 is a schematic front view of a reflective display panel according to the ninth embodiment of the disclosure.
FIG. 12 is a schematic front view of a reflective display panel according to the tenth embodiment of the disclosure.
FIG. 13 is a schematic front view of a reflective display panel according to the eleventh embodiment of the disclosure.

### DETAILED DESCRIPTION OF DISCLOSED EMBODIMENTS

It is to be understood that both the foregoing and other detailed descriptions, features and advantages are intended to be described more comprehensively by providing an embodiment accompanied with figures hereinafter. Directional terms used in the following embodiments, such as upper, lower, left, right, front, and rear, merely refer to directions in the accompanying drawings. Therefore, the directional terms are used to illustrate rather than limit the disclosure.

Reference will now be made in detail to the exemplary embodiments of the disclosure, and examples of the exemplary embodiments are illustrated in the accompanying drawings. Whenever possible, the same reference numerals are used in the drawings and descriptions to indicate the same or similar parts.

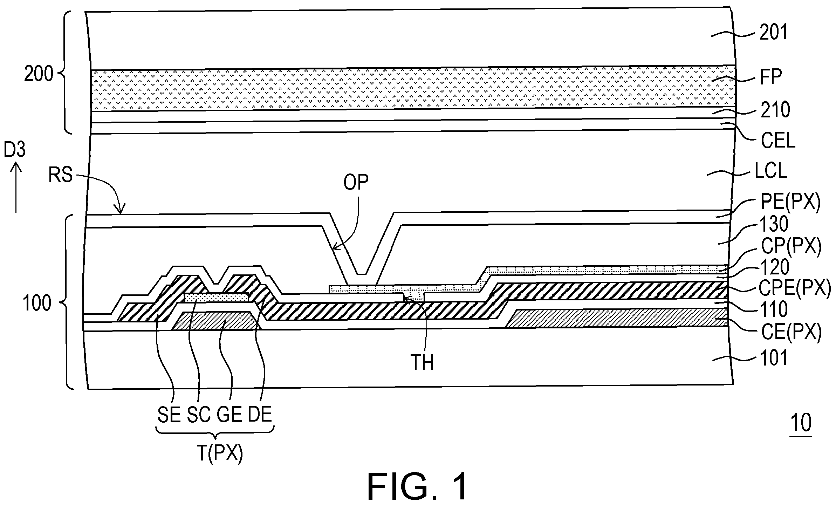

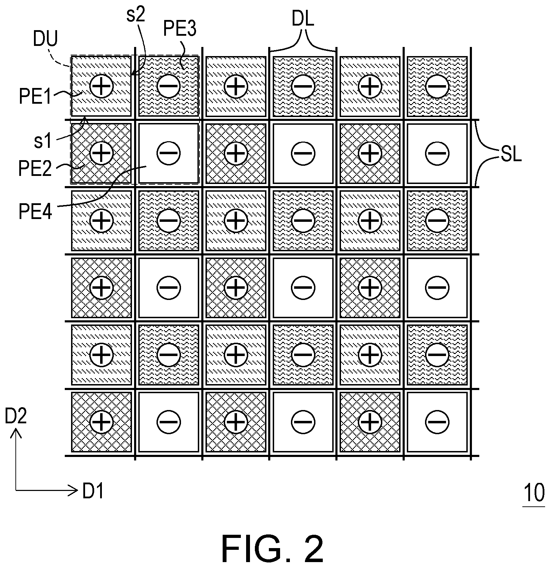

FIG. 1 is a schematic cross-sectional view of a reflective display panel according to the first embodiment of the disclosure. FIG. 2 is a schematic front view of the reflective display panel according to the first embodiment of the disclosure. Referring to FIGs. 1 and 2, a reflective display panel 10 includes a pixel array substrate 100, a color filter substrate 200, and a liquid crystal layer LCL. The pixel array substrate 100 and the color filter substrate 200 are disposed overlapping along a direction D3, for example. The liquid crystal layer LCL is disposed between the pixel array substrate 100 and the color filter substrate 200. It should be noted first that unless otherwise mentioned below, an overlapping relationship between two components is defined along the direction D3, and an overlapping direction thereof will not be repeated in the following. In various embodiments, the reflective display panel 10 may be a total reflective or a transflective display panel.

The pixel array substrate 100 is provided with multiple display units DU, multiple scan lines SL, and multiple data lines DL. In this embodiment, the display units DU may be arranged in multiple columns and multiple rows along a direction D1 and a direction D2 respectively, and each of the display units DU includes four pixel structures PX. The direction D1 may optionally be perpendicular to the direction D2, but the disclosure is not limited thereto. The data lines DL may be arranged along the direction D1 and extend in the direction D2, while the scan lines SL may be arranged along the direction D2 and extend in the direction D1. Each of the pixel structures PX may be electrically connected to one scan line SL and one data line DL, but the disclosure is not limited thereto.

The pixel structure PX may include an active device T and a pixel electrode PE electrically connected to each other. In this embodiment, a method of forming the active device T may include the following steps. A gate GE, a gate insulating layer 110, a semiconductor pattern SC, a source SE, and a drain DE are formed in sequence on a first substrate 101. The semiconductor pattern SC is disposed overlapping the gate GE. The source SE and the drain DE overlap the semiconductor pattern SC, and are in electrical contact with two different areas of the semiconductor pattern SC. In this embodiment, the gate GE of the active device T may be optionally disposed below the semiconductor pattern SC to form a bottom-gate thin film transistor (bottom-gate TFT), but the disclosure is not limited thereto. In other embodiments, the gate of the active device may also be optionally disposed above the semiconductor pattern to form a top-gate thin film transistor (top-gate TFT).

Furthermore, the active device T may be covered with an insulating layer 120 and an insulating layer 130 in sequence. In this embodiment, the insulating layer 120 is, for example, a passivation layer, and the insulating layer 130 is, for example, a planarization layer. It should be noted that the gate GE, the source SE, the drain DE, the semiconductor pattern SC, the gate insulating layer 110, the passivation layer (i.e., the insulating layer 120), and the planarization layer (i.e., the insulating layer 130) may be respectively implemented by any gate, any source, any drain, any semiconductor pattern, any gate insulating layer, any passivation layer, and any planarization layer used for the reflective display panel that is well known to those skilled in the art, and the gate GE, the source SE, the drain DE, the semiconductor pattern SC, the gate insulating layer 110, the passivation layer, and the planarization layer may be formed by any method that is well known to those skilled in the art. Therefore, the same details will not be repeated in the following. In this embodiment, the pixel electrode PE is, for example, a reflective electrode, and a material of the reflective electrode includes metal, alloy, nitride of a metal material, oxide of a metal material, oxynitride of a metal material or other suitable materials, or a stacked layer of metal materials and other conductive materials.

In this embodiment, the pixel structure PX may further include a common electrode CE, a capacitance electrode CPE, and a conductive pattern CP that overlap each other. The common electrode CE is disposed between the first substrate 101 and the gate insulating layer 110. The capacitance electrode CPE is disposed between the gate insulating layer 110 and the insulating layer 120. The conductive pattern CP is disposed between the insulating layer 120 and the insulating layer 130. The insulating layer 130 has an opening OP, and the opening OP exposes a partial surface of the conductive pattern CP. The pixel electrode PE of the pixel structure PX is disposed on a surface of the insulating layer 130, and is electrically connected to the conductive pattern CP through the opening OP of the insulating layer 130. The conductive pattern CP is electrically connected to the capacitance electrode CPE through a contact hole TH of the insulating layer 120, and the capacitance electrode CPE may extend from the drain DE of the active device T. However, the disclosure is not limited thereto.

On the other hand, the color filter substrate 200 includes a second substrate 201 and multiple filter patterns FP disposed on the second substrate 201. The filter patterns FP may respectively overlap the pixel electrodes PE of the pixel structures PX, and have at least three filter colors. For example, in this embodiment, each of the filter patterns FP is adapted to allow red light, green light, blue light, or white light to pass through, but the disclosure is not limited thereto.

In this embodiment, a common electrode layer CEL and a cladding layer 210 may be further disposed on the second substrate 201. The cladding layer 210 covers the filter patterns FP, and the common layer electrode CEL is disposed on the cladding layer 210. An electric field generated between the common electrode layer CEL and the pixel electrode PE is adapted to drive multiple liquid crystal molecules (not shown) in the liquid crystal layer LCL to rotate to form an arrangement state corresponding to a direction and intensity of the electric field. By changing the arrangement state of the liquid crystal molecules, a polarization state of light passing through the liquid crystal layer LCL is changed to form a light-emitting brightness corresponding to the arrangement state.

For example, in this embodiment, the four pixel structures PX of each of the display units DU respectively have a pixel electrode PE1, a pixel electrode PE2, a pixel electrode PE3, and a pixel electrode PE4, and the four pixel electrodes PE1 to PE4 respectively overlap four filter patterns FP having different filter colors (e.g., red, green, blue, and white). By individually adjusting driving voltages of the four pixel electrodes PE1 to PE4, a display color after the light is reflected by the reflective display panel 10 may be changed. More specifically, each of the display units DU may constitute a display pixel of the reflective display panel 10.

It is particularly noted that in each of frame periods of the reflective display panel 10, two pixel electrodes PE are adjacent to at least one side of any one of the pixel electrodes PE in each of the display units DU, and a voltage polarity of one of the three pixel electrodes PE is opposite to a voltage polarity of each of the other two.

For example, in the display unit DU in this embodiment, the pixel electrode PE2 and the pixel electrode PE3 are respectively adjacent to a first side s1 and a second side s2 of the pixel electrode PE1. An extension direction of the first side s1 is, for example, parallel to the direction D1. An extension direction of the second side s2 is, for example, parallel to the direction D2. The first side s1 is connected to the second side s2. In one frame period, a voltage polarity of the pixel electrode PE1 is the same as a voltage polarity of one of the pixel electrode PE2 and the pixel electrode PE3 (e.g., the pixel electrode PE2), and is opposite to a voltage polarity of the other one (e.g., the pixel electrode PE3). Similarly, the pixel electrode PE1 and the pixel electrode PE4 are respectively adjacent to two sides of the pixel electrode PE2. In the frame period, the voltage polarity of the pixel electrode PE2 is the same as the voltage polarity of the pixel electrode PE1, and is opposite to a voltage polarity of the pixel electrode PE4. By analogy, a configuration relationship of the voltage polarities between each of the pixel electrode PE3 and the pixel electrode PE4 and the two adjacent pixel electrodes will not be repeated in the following.

From another perspective, in this embodiment, any two adjacent ones of the four pixel electrodes PE of each of the display units DU may be aligned and arranged along the direction D1 or the direction D2. For example, the pixel electrode PE1 and the pixel electrode PE2 are aligned and arranged along the direction D2, and the pixel electrode PE3 and the pixel electrode PE4 are aligned and arranged along the direction D2. The pixel electrode PE1 and the pixel electrode PE3 may be aligned and arranged along the direction D 1, and the pixel electrode PE2 and the pixel electrode PE4 may be aligned and arranged along the direction D1. However, the disclosure is not limited thereto.

Through an electrical configuration and a distribution relationship of the above four pixel electrodes, distribution densities of two adjacent pixel electrodes PE having the same voltage polarity may be increased, which helps to reduce an misalignment area of the liquid crystal layer LCL caused by different voltage polarities of the two adjacent pixel electrodes PE, thereby reducing dark-state light leakage of the reflective display panel 10. In other words, display contrast and reflectivity of the reflective display panel 10 may be improved.

Some other embodiments are provided below to describe the invention in detail, where the same reference numerals denote the same or like components, and descriptions of the same technical contents are omitted. The aforementioned embodiment may be referred for descriptions of the omitted parts, and detailed descriptions thereof are not repeated in the following embodiment.

It should be noted first that film layer structures of the reflective display panels in each of the following embodiments is similar to those of the reflective display panel in FIG. 1 other than the pixel electrodes. Therefore, relevant paragraphs of the foregoing embodiments may be referred for illustrations of the film layer structures other than the pixel electrodes and related descriptions thereof.

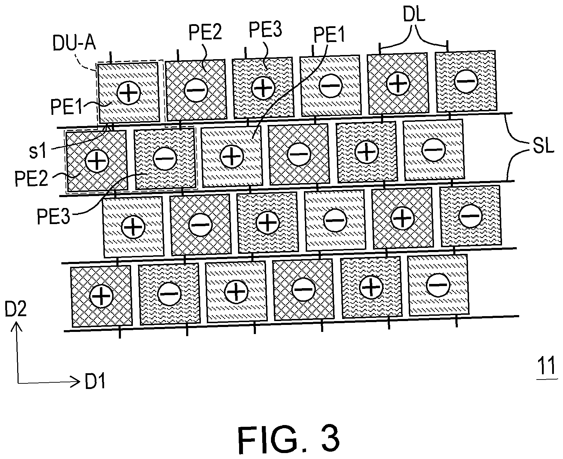

FIG. 3 is a schematic front view of a reflective display panel according to the second embodiment of the disclosure. Referring to FIG. 3, a difference between a reflective display panel 11 in this embodiment and the reflective display panel 10 in FIG. 2 is that the number and relative positions of the pixel electrodes of the display unit are different. Compared to the reflective display panel 10 in FIG. 2, in the reflective display panel 11 in this embodiment, a display unit DU-A thereof only includes three pixel electrodes, which are the pixel electrode PE1, the pixel electrode PE2, and the pixel electrode PE3 respectively.

It is particularly noted that in this embodiment, the pixel electrode PE2 and the pixel electrode PE3 of each of the display units DU-A may be aligned and arranged along the direction D1, but each are respectively staggered to the pixel electrode PE1 along the direction D2. From another perspective, both the pixel electrode PE2 and the pixel electrode PE3 are adjacent to one side of the pixel electrode PE1 (e.g., the first side s1 parallel to the direction D1 in FIG. 3), and are adj acent to each other. Since an overlapping relationship between multiple filter patterns (not shown) and the pixel electrodes of the reflective display panel 11 in this embodiment is similar to that of the reflective display panel 10 in FIGs. 1 and 2, relevant paragraphs of the foregoing embodiments may be referred for detailed descriptions, and the same details will not be repeated in the following.

In particular, in each of frame periods of the reflective display panel 11, a voltage polarity of one of the three pixel electrodes of each of the display units DU-A is opposite to a voltage polarity of at least one of another. For example, in one frame period, the voltage polarity of the pixel electrode PE1 is the same as the voltage polarity of the pixel electrode PE2, and is opposite to the voltage polarity of the pixel electrode PE3.

Through the electrical configuration and a distribution relationship of the above three the pixel electrodes, the misalignment area of the liquid crystal layer caused by different voltage polarities of the two adjacent pixel electrodes may be reduced, thereby reducing dark-state light leakage of the reflective display panel 11. In other words, display contrast and reflectivity of the reflective display panel 11 may be improved.

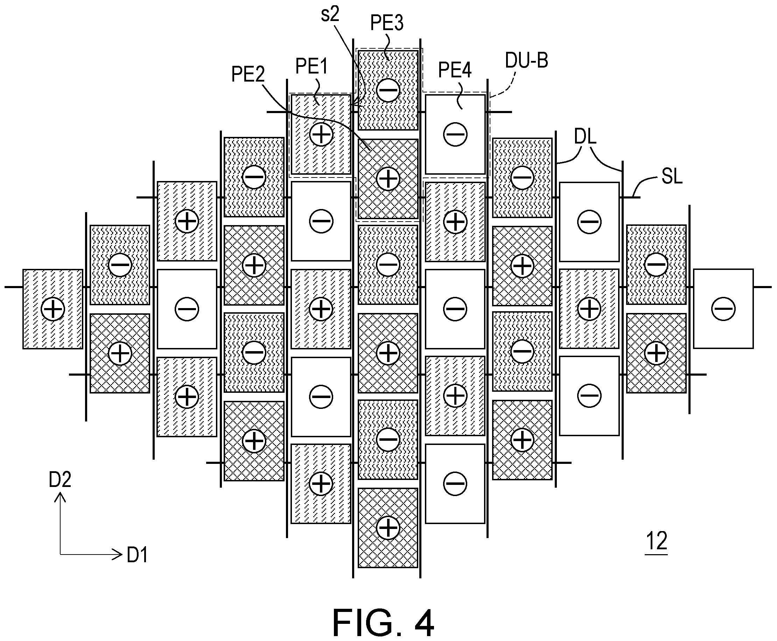

FIG. 4 is a schematic front view of a reflective display panel according to the third embodiment of the disclosure. Referring to FIG. 4, a difference between a reflective display panel 12 in this embodiment and the reflective display panel 10 in FIG. 2 is that relative positional relationships between the pixel electrodes in the display unit are different.

In this embodiment, the pixel electrode PE2 and the pixel electrode PE3 are aligned and arranged along the direction D2, and both are adjacent to one side of the pixel electrode PE1 (e.g., the second side s2). It is particularly noted that the pixel electrode PE2 and the pixel electrode PE3 are staggered to the pixel electrode PE1 along a direction (e.g., the direction D1) perpendicular to the second side s2. The pixel electrode PE2 and the pixel electrode PE3 are further adjacent to the pixel electrode PE4 on one side facing away from the pixel electrode PE1, and the pixel electrode PE4 and the pixel electrode PE1 may be aligned and arranged along the direction D2. That is, the pixel electrode PE2 and the pixel electrode PE3 are staggered to the pixel electrode PE4 along the direction D 1.

Since an overlapping relationship between multiple filter patterns (not shown) and the pixel electrodes of the reflective display panel 12 in this embodiment is similar to that of the reflective display panel 10 in FIGs. 1 and 2, relevant paragraphs of the foregoing embodiments may be referred for detailed descriptions, and the same details will not be repeated in the following.

In particular, in each of frame periods of the reflective display panel 12, the voltage polarity of the pixel electrode PE1 of each of display units DU-B is the same as the voltage polarity of the pixel electrode PE2, and is opposite to the voltage polarity of the pixel electrode PE3. Similarly, the voltage polarity of the pixel electrode PE4 is the same as the voltage polarity of the pixel electrode PE3, and is opposite to the voltage polarity of the pixel electrode PE2. From another perspective, the voltage polarity of the pixel electrode PE2 is the same as the voltage polarity of the pixel electrode PE1, and is opposite to the voltage polarity of the pixel electrode PE4. The voltage polarity of the pixel electrode PE3 is the same as the voltage polarity of the pixel electrode PE4, and is opposite to the voltage polarity of the pixel electrode PE1.

Through the electrical configuration and the distribution relationship of the above four pixel electrodes, the misalignment area of the liquid crystal layer caused by different voltage polarities of the two adjacent pixel electrodes may be effectively reduced, thereby reducing dark-state light leakage of the reflective display panel 12. In other words, display contrast and reflectivity of the reflective display panel 12 may be improved.

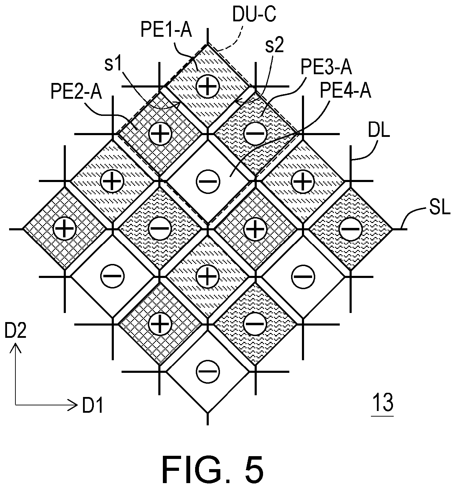

FIG. 5 is a schematic front view of a reflective display panel according to the fourth embodiment of the disclosure. Referring to FIG. 5, a difference between a reflective display panel 13 in this embodiment and the reflective display panel 10 in FIG. 2 is that the pixel electrodes of the display unit are arranged in different ways. Specifically, in a display unit DU-C in this embodiment, the extension directions of the first side s1 and the second side s2 of a pixel electrode PE1-A intersect with the direction D1 and the direction D2. The pixel electrode PE1-A and a pixel electrode PE2-A are aligned and arranged along the extension direction of the second side s2. The pixel electrode PE1-A and a pixel electrode PE3-A are aligned and arranged along the extension direction of the first side s1. Similarly, the pixel electrode PE2-A and a pixel electrode PE4-A are aligned and arranged along the extension direction of the first side s1, and the pixel electrode PE3-A and the pixel electrode PE4-A are aligned and arranged along the extension direction of the second side s2.

From another perspective, in this embodiment, an outline of a reflective surface (a reflective surface RS as shown in FIG. 1) of each of the pixel electrodes is a rhombus, and an outline of a distribution area of each of the display units DU-C is also a rhombus. Since the electrical configuration and the relative relationship of the four pixel electrodes in the display unit DU-C in this embodiment are similar to those of the display unit DU of the reflective display panel 10 in FIG. 2, relevant paragraphs of the foregoing embodiments may be referred for detailed descriptions, and the same details will not be repeated in the following.

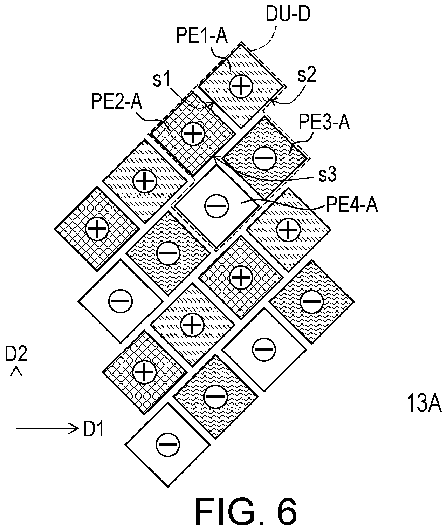

FIG. 6 is a schematic front view of a reflective display panel according to the fifth embodiment of the disclosure. Referring to FIG. 6, a difference between a reflective display panel 13A in this embodiment and the reflective display panel 13 in FIG. 5 is that the pixel electrodes of the display unit are arranged in different ways.

Specifically, in a display unit DU-D in this embodiment, the pixel electrode PE1-A and the pixel electrode PE2-A are aligned and arranged along the extension direction of the second side s2, and the pixel electrode PE3-A and the pixel electrode PE4- A are aligned and arranged along the extended direction of the second side s2. It is particularly noted that the pixel electrode PE3-A and the pixel electrode PE4-A are staggered to the pixel electrode PE1-A and the pixel electrode PE2-A along the extension direction of the first side s1. The pixel electrode PE3-A is adj acent to the second side s2 of the pixel electrode PE1-A and a third side s3 of the pixel electrode PE2-A at the same time.

Since the electrical configuration and the relative relationship of the four pixel electrodes in the display unit DU-D in this embodiment are similar to those of the display unit DU-C of the reflective display panel 13 in FIG. 5, relevant paragraphs of the foregoing embodiments may be referred for detailed descriptions, and the same details will not be repeated in the following.

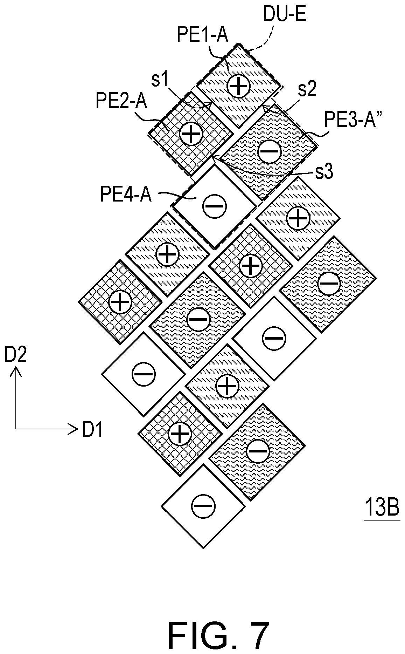

FIG. 7 is a schematic front view of a reflective display panel according to the sixth embodiment of the disclosure. Referring to FIG. 7, a difference between a reflective display panel 13B in this embodiment and the reflective display panel 13A in FIG. 6 is that areas of the reflective surfaces of some of the pixel electrodes are different. Specifically, in a display unit DU-E in this embodiment, the area of the reflective surface (the reflective surface RS as shown in FIG. 1) of one of the four pixel electrodes is different from the area of the reflective surface of another one of the four pixel electrodes.

For example, in this embodiment, an area of a reflective surface of a pixel electrode PE3-A" may be greater than an area of a reflective surface of each of the pixel electrode PE1-A, the pixel electrode PE2-A, and the pixel electrode PE4-A, but the disclosure is not limited thereto. In this way, a background color of the reflective display panel 13B may be adjusted. It should be noted that in other modified embodiments, in order to increase flexibility of the adjustment of the background color, the areas of the reflective surfaces of the pixel electrodes of the display unit may be different from each other.

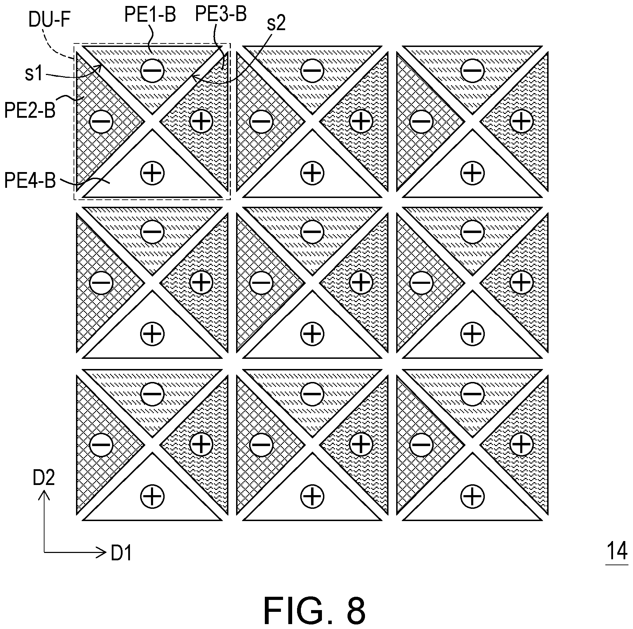

FIG. 8 is a schematic front view of a reflective display panel according to the seventh embodiment of the disclosure. Referring to FIG. 8, a difference between a reflective display panel 14 in this embodiment and the reflective display panel 10 in FIG. 2 is that the outlines of the reflective surfaces of the pixel electrodes are different. Specifically, in a display unit DU-F in this embodiment, the outline of the reflective surface (the reflective surface RS as shown in FIG. 1) of each of the pixel electrodes is a triangle.

For example, the first side s1 and the second side s2 of a pixel electrode PE1-B both intersect with the direction D1 and the direction D2, and are connected to each other. The pixel electrode PE1-B and a pixel electrode PE2-B are aligned and arranged along the extension direction of the second side s2, while a pixel electrode PE3-B and the pixel electrode PE1-B are aligned and arranged along the extension direction of the first side s1. A pixel electrode PE4-B and the pixel electrode PE2-B are aligned and arranged along the extension direction of the first side s1, while the pixel electrode PE4-B and the pixel electrode PE3-B are aligned and arranged along the extension direction of the second side s2.

It is particularly noted that in each of frame periods of the reflective display panel 14, a voltage polarity of the pixel electrode PE1-B in each of the display units DU-F is the same as a voltage polarity of the adjacent pixel electrode PE2-B, and is opposite to a voltage polarity of another adjacent pixel electrode PE3-B. Similarly, the pixel electrode PE2-B and the pixel electrode PE3-B are further adjacent to two sides of the pixel electrode PE4-B that are connected to each other. In each of the frame periods, a voltage polarity of the pixel electrode PE4-B is the same as the voltage polarity of the adjacent pixel electrode PE3-B, and is opposite to the voltage polarity of another adjacent pixel electrode PE2-B.

Through the electrical configuration and the distribution relationship of the above four pixel electrodes, the misalignment area of the liquid crystal layer caused by different voltage polarities of the two adjacent pixel electrodes may be effectively reduced, thereby reducing dark-state light leakage of the reflective display panel 14. In other words, display contrast and reflectivity of the reflective display panel 14 may be improved.

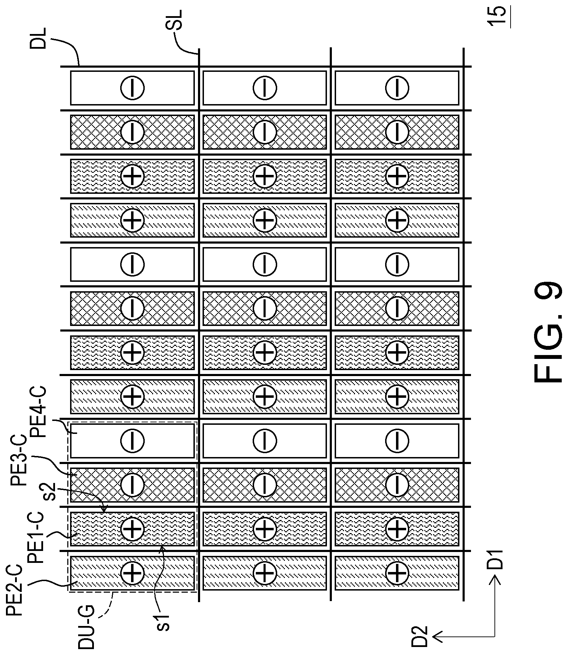

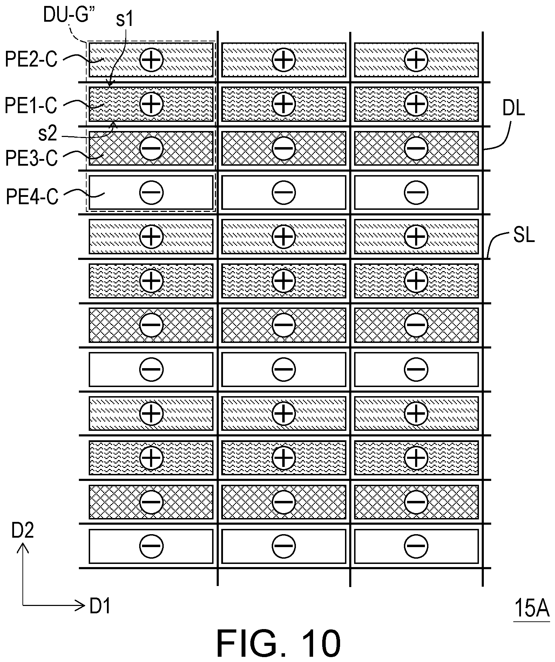

FIG. 9 is a schematic front view of a reflective display panel according to an eighth embodiment of the disclosure. FIG. 10 is a schematic front view of the reflective display panel in FIG. 9 according to another modified embodiment. Referring to FIG. 9, a difference between a reflective display panel 15 in this embodiment and the reflective display panel 10 in FIG. 2 is that the pixel electrodes of the display unit are arranged in different ways. Specifically, in a display unit DU-G in this embodiment, a pixel electrode PE1-C, a pixel electrode PE2-C, a pixel electrode PE3-C, and a pixel electrode PE4-C may be aligned and arranged along an extension direction (e.g., the direction D1) of the scan line SL, and an outline of each of reflective surfaces thereof is a rectangle.

For example, in this embodiment, the pixel electrode PE2-C and the pixel electrode PE3-C are respectively adjacent to the first side s1 and the second side s2 of the pixel electrode PE1-C that face away from each other. The pixel electrode PE4-C is adjacent to one side of the pixel electrode PE3-C facing away from the pixel electrode PE1-C. The first side s1 and the second side s2 may be perpendicular to the extension direction of the scan line SL. That is, the extension directions of the two sides may be parallel to the direction D2. In each of frame periods of the reflective display panel 15, a voltage polarity of the pixel electrode PE1-C is the same as a voltage polarity of the pixel electrode PE2-C, and is opposite to a voltage polarity of the pixel electrode PE3-C. Similarly, the voltage polarity of the pixel electrode PE3-C is the same as a voltage polarity of the pixel electrode PE4-C, and is opposite to the voltage polarity of the pixel electrode PE1-C.

Through the electrical configuration and the distribution relationship of the above four pixel electrodes, the misalignment area of the liquid crystal layer caused by different voltage polarities of the two adjacent pixel electrodes may be effectively reduced, thereby reducing dark-state light leakage of the reflective display panel 15. In other words, display contrast and reflectivity of the reflective display panel 15 may be improved.

However, the disclosure is not limited thereto. As shown in FIG. 10, in a reflective display panel 15A in another modified embodiment, the four pixel electrodes PE1-C to PE4-C of each of display units DU-G" may aligned and arranged along an extension direction (e.g., the direction D2) of the data line DL. The first side s1 and the second side s2 of the pixel electrode PE1-C may be perpendicular to the extension direction of the data line DL. That is, the extension direction of the two sides may be parallel to the direction D1.

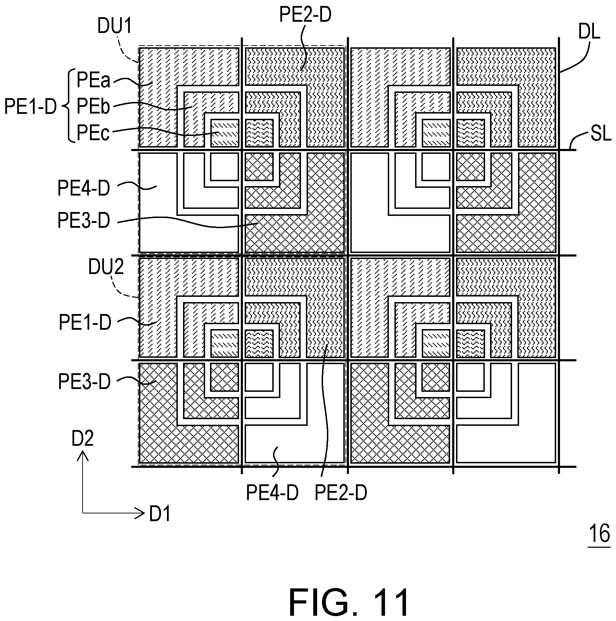

FIG. 11 is a schematic front view of a reflective display panel according to the ninth embodiment of the disclosure. Referring to FIG. 11, a difference between a reflective display panel 16 in this embodiment and the reflective display panel 10 in FIG. 2 is that the conformations of the pixel electrodes are different. In this embodiment, multiple pixel electrodes PE1-D to PE4-D of each of the display units have multiple sub-electrodes that are electrically independent of each other. For example, the number of sub-electrodes of each of the pixel electrodes in this embodiment may be three, which are a sub-electrode PEa, a sub-electrode PEb, and a sub-electrode PEc respectively. Correspondingly, the number of active devices of each of the pixel structures may also be three, which are electrically connected to the three sub-electrodes PEa to PEc respectively. More specifically, the three sub-electrodes PEa to PEc of each of the pixel electrodes may be individually controlled through the active devices. Through the configuration of the sub-electrodes, the number of display color scales of the reflective display panel 16 may be increased, which helps to improve display contrast thereof.

It is particularly noted that in this embodiment, the pixel electrodes of the two display units adjacently arranged along the direction D1 may be disposed in the same way, but the pixel electrodes of the two display units adjacently arranged along the direction D2 may be disposed in different ways. For example, the pixel electrode PE1-D and the pixel electrode PE2-D of each of a display unit DU1 and a display unit DU2 adjacently arranged along the direction D2 are aligned and arranged along the direction D1, and the pixel electrode PE1-D and the pixel electrode PE2-D of the display unit DU1 are respectively aligned with the pixel electrode PE1-D and the pixel electrode PE2-D of the display unit DU2 along the direction D2. The pixel electrode PE3-D of the display unit DU1 is staggered to the pixel electrode PE3-D of the display unit DU2 along the direction D2, and the pixel electrode PE4-D of the display unit DU1 is staggered to the pixel electrode PE4-D of the display unit DU2 along the direction D2. In other words, in the direction D2, the pixel electrode PE3-D and the pixel electrode PE4-D of the display unit DU1 are respectively aligned with the pixel electrode PE4-D and pixel electrode PE3-D of the display unit DU2. However, the disclosure is not limited thereto. In other embodiments, the pixel electrodes of each of the display units may be arranged in the same way.

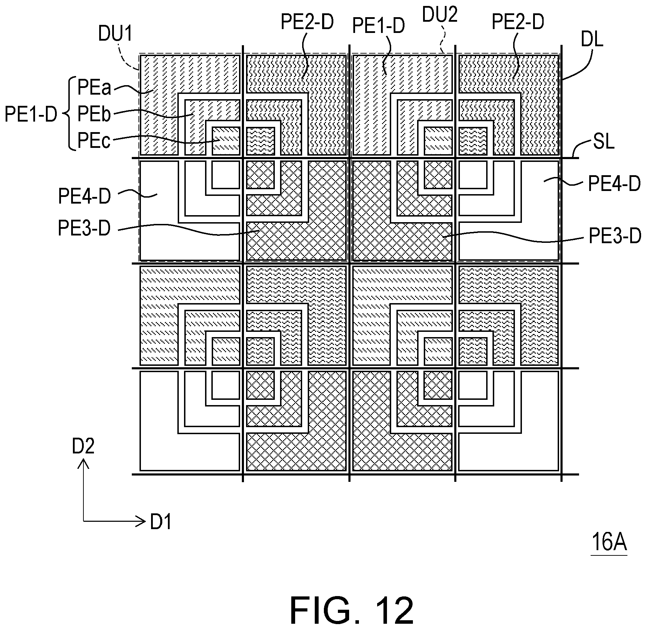

FIG. 12 is a schematic front view of a reflective display panel according to the tenth embodiment of the disclosure. Referring to FIG. 12, a difference between a reflective display panel 16A in this embodiment and the reflective display panel 16 in FIG. 11 is that the pixel electrodes of the display unit are arranged in different ways. Specifically, in the reflective display panel 16A in this embodiment, the pixel electrodes of the two display units adjacently arranged along the direction D1 may be disposed in different ways, but the pixel electrodes of the two display units adjacently arranged along the direction D2 may be disposed in the same way.

For example, the pixel electrode PE1-D and the pixel electrode PE2-D of each of the display unit DU1 and the display unit DU2 adjacently arranged along the direction D1 are aligned and arranged along the direction D1, and the pixel electrode PE3-D and the pixel electrode PE4-D of each of the display unit DU1 and the display unit DU2 are aligned and arranged along the direction D1. It is particularly noted that in the display unit DU1, the pixel electrode PE3-D and the pixel electrode PE2-D are aligned and arranged along the direction D2, but in the display unit DU2, the pixel electrode PE3-D and the pixel electrode PE1-D are aligned and arranged along the direction D2.

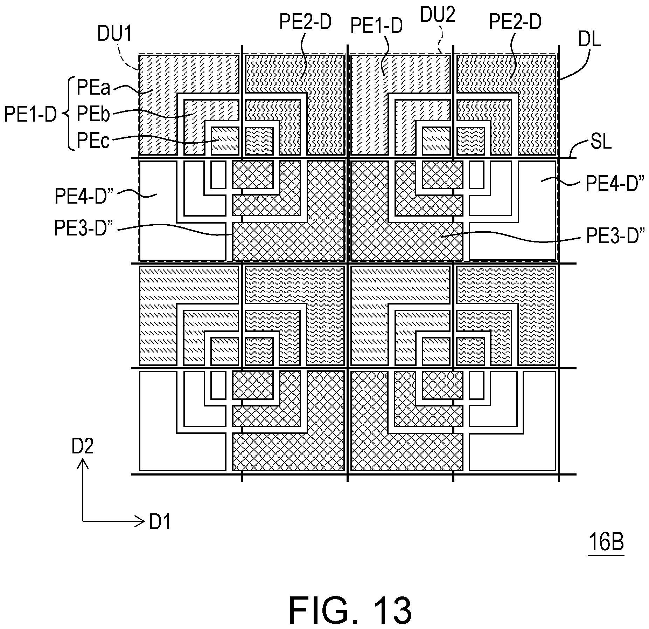

FIG. 13 is a schematic front view of a reflective display panel according to the eleventh embodiment of the disclosure. Referring to FIG. 12, a difference between a reflective display panel 16B in this embodiment and the reflective display panel 16A in FIG. 12 is that area ratios of the reflective surfaces of the pixel electrodes of the display unit are different. Specifically, in the reflective display panel 16B in this embodiment, the area of the reflective surface of one of the pixel electrodes of each of the display units may be different from the area of the reflective surface of another of the pixel electrodes.

For example, in this embodiment, an area of a reflective surface of each of the pixel electrode PE1-D and the pixel electrode PE2-D of each of the display units may be less than an area of a reflective surface of a pixel electrode PE3-D" and greater than an area of a reflective surface of a pixel electrode PE4-D". Accordingly, a background color of the reflective display panel 16B may be adjusted.

In particular, structural features of the pixel electrode having the sub-electrodes shown in FIGs. 11 to 13 may also be applied to the reflective display panel of any embodiment of FIGs. 1 to 10 to further increase the number of display color scales thereof and/or adjust the background color.

Based on the above, in the reflective display panel according to an embodiment of the disclosure, two pixel electrodes are adjacent to at least one side of one pixel electrode of each of the display units. In the same frame period, the voltage polarity of one of the three pixel electrodes is opposite to the voltage polarities of the other two. In this way, the distribution densities of the two adjacent pixel electrodes having the opposite voltage polarities may be reduced, thereby reducing the misaligned area of the liquid crystal layer caused by different voltage polarities between the two adjacent pixel electrodes, so as to reduce the dark-state light leakage of the reflective display panel. Therefore, the display contrast and reflectivity of the reflective display panel may be significantly improved. In the reflective display panel according to another embodiment of the disclosure, each of the pixel electrodes in the display unit is formed by the sub-electrodes that are electrically independent of each other. In this way, the number of display color scales of the reflective display panel may be increased, which helps to improve the display contrast thereof.

## Claims

1. A reflective display panel (10, 11, 12, 13, 13A, 13B, 14, 15, 15A, 16, 16A, 16B), comprising:
a pixel array substrate (100) provided with a plurality of display units (DU, DU-A, DU-B, DU-C, DU-D, DU-E, DU-F, DU-G, DU-G", DU1, DU2), wherein each of the display units (DU, DU-A, DU-B, DU-C, DU-D, DU-E, DU-F, DU-G, DU-G", DU1, DU2) comprises:
a first pixel electrode, a second pixel electrode, and a third pixel electrode, wherein the second pixel electrode and the third pixel electrode are adjacent to at least one side of the first pixel electrode, and in a same frame period of the reflective display panel (10, 11, 12, 13, 13A, 13B, 14, 15, 15A, 16, 16A, 16B), a voltage polarity of one of the first pixel electrode, the second pixel electrode, and the third pixel electrode is opposite to voltage polarities of the other two of the first pixel electrode, the second pixel electrode, and the third pixel electrode;
a color filter substrate provided with a plurality of filter patterns (FP), wherein three of the filter patterns (FP) respectively overlapping the first pixel electrode, the second pixel electrode, and the third pixel electrode of each of the display units (DU, DU-A, DU-B, DU-C, DU-D, DUE, DU-F, DU-G, DU-G", DU1, DU2) have different filter colors from each other;
a liquid crystal layer (LCL) disposed between the pixel array substrate (100) and the color filter substrate.

2. The reflective display panel (10, 11, 12, 13, 13A, 13B, 14, 15, 15A, 16, 16A, 16B) according to claim 1, wherein the second pixel electrode and the third pixel electrode are respectively adjacent to a first side (s1) and a second side (s2) of the first pixel electrode, the first side (s1) is connected to the second side (s2), and the pixel array substrate (100) is further provided with:
a plurality of data lines (DL) arranged along a first direction and extending in a second direction, wherein the first direction is perpendicular to the second direction; and
a plurality of scan lines (SL) arranged along the second direction and extending in the first direction, an extension direction of the first side (s1) is parallel to the first direction, an extension direction of the second side (s2) is parallel to the second direction, and in the same frame period of the reflective display panel (10, 11, 12, 13, 13A, 13B, 14, 15, 15A, 16, 16A, 16B), the voltage polarity of the first pixel electrode is the same as the voltage polarity of one of the second pixel electrode and the third pixel electrode, and is opposite to the voltage polarity of the other one of the second pixel electrode and the third pixel electrode.

3. The reflective display panel (10, 11, 12, 13, 13A, 13B, 14, 15, 15A, 16, 16A, 16B) according to claim 2, wherein the first pixel electrode and the second pixel electrode are aligned and arranged along the second direction, and the first pixel electrode and the third pixel electrode are aligned and arranged along the first direction.

4. The reflective display panel (10, 11, 12, 13, 13A, 13B, 14, 15, 15A, 16, 16A, 16B) according to claim 2, wherein the second pixel electrode and the third pixel electrode are aligned and arranged along the first direction, and the second pixel electrode and the third pixel electrode are each staggered to the first pixel electrode along the second direction, and are both adjacent to one side of the first pixel electrode.

5. The reflective display panel (10, 11, 12, 13, 13A, 13B, 14, 15, 15A, 16, 16A, 16B) according to claim 2, wherein the second pixel electrode and the third pixel electrode are aligned and arranged along the second direction, and the second pixel electrode and the third pixel electrode are staggered to the first pixel electrode along the first direction, and are both adjacent to one side of the first pixel electrode.

6. The reflective display panel (10, 11, 12, 13, 13A, 13B, 14, 15, 15A, 16, 16A, 16B) according to claim 1, wherein the second pixel electrode and the third pixel electrode are respectively adjacent to a first side (s1) and a second side (s2) of the first pixel electrode, the first side (s1) is connected to the second side (s2), and the pixel array substrate (100) is further provided with:
a plurality of data lines (DL) arranged along a first direction and extending in a second direction, wherein the first direction is perpendicular to the second direction; and
a plurality of scan lines (SL) arranged along the second direction and extending in the first direction, wherein an extension direction of the first side (s1) intersects with the first direction, an extension direction of the second side (s2) intersects with the second direction, and in the same frame period of the reflective display panel (10, 11, 12, 13, 13A, 13B, 14, 15, 15A, 16, 16A, 16B), the voltage polarity of the first pixel electrode is the same as the voltage polarity of one of the second pixel electrode and the third pixel electrode, and is opposite to the voltage polarity of the other one of the second pixel electrode and the third pixel electrode.

7. The reflective display panel (10, 11, 12, 13, 13A, 13B, 14, 15, 15A, 16, 16A, 16B) according to claim 6, wherein each of the first pixel electrode, the second pixel electrode, and the third pixel electrode has a reflective surface (RS), and an outline of the reflective surface (RS) is a triangle or a rhombus.

8. The reflective display panel (10, 11, 12, 13, 13A, 13B, 14, 15, 15A, 16, 16A, 16B) according to claim 6, wherein the first pixel electrode and the second pixel electrode are aligned and arranged along the extension direction of the first side (s1), and the first pixel electrode and the third pixel electrode are aligned and arranged along the extension direction of the second side (s2).

9. The reflective display panel (10, 11, 12, 13, 13A, 13B, 14, 15, 15A, 16, 16A, 16B) according to claim 6, wherein the first pixel electrode and the second pixel electrode are aligned and arranged along the extension direction of the second side (s2), and the third pixel electrode is staggered to the first pixel electrode and the second pixel electrode along the extension direction of the first side (s1), and is further adjacent to a third side (s3) of the second pixel electrode.

10. The reflective display panel (10, 11, 12, 13, 13A, 13B, 14, 15, 15A, 16, 16A, 16B) according to claim 9, wherein an area of a reflective surface (RS) of one of the first pixel electrode, the second pixel electrode, and the third pixel electrode is different from an area of a reflective surface (RS) of another one of the first pixel electrode, the second pixel electrode, and the third pixel electrode.

11. The reflective display panel (10, 11, 12, 13, 13A, 13B, 14, 15, 15A, 16, 16A, 16B) according to claim 1, wherein the second pixel electrode and the third pixel electrode are respectively adjacent to a first side (s1) and a second side (s2) of the first pixel electrode, the first side (s1) faces away from the second side (s2), and the pixel array substrate (100) is further provided with:
a plurality of data lines (DL) arranged along a first direction and extending in a second direction, wherein the first direction is perpendicular to the second direction; and
a plurality of scan lines (SL) arranged along the second direction and extending in the first direction, wherein extension directions of each of the first side (s1) and the second side (s2) are parallel to the first direction or the second direction, and in the same frame period of the reflective display panel (10, 11, 12, 13, 13A, 13B, 14, 15, 15A, 16, 16A, 16B), the voltage polarity of the first pixel electrode is the same as the voltage polarity of one of the second pixel electrode and the third pixel electrode, and is opposite to the voltage polarity of the other one of the second pixel electrode and the third pixel electrode.

12. The reflective display panel (10, 11, 12, 13, 13A, 13B, 14, 15, 15A, 16, 16A, 16B) according to claim 11, wherein the second pixel electrode and the third pixel electrode are aligned and arranged along a direction perpendicular to the first side (s1) and the second side (s2), and are staggered to the first pixel electrode.

13. The reflective display panel (10, 11, 12, 13, 13A, 13B, 14, 15, 15A, 16, 16A, 16B) according to claim 11, wherein the first pixel electrode, the second pixel electrode, and the third pixel electrode are aligned and arranged along a direction perpendicular to the first side (s1) and the second side (s2).

14. The reflective display panel (10, 11, 12, 13, 13A, 13B, 14, 15, 15A, 16, 16A, 16B) according to claim 1, wherein each of the first pixel electrode, the second pixel electrode, and the third pixel electrode has a plurality of sub-electrodes (Pea, PEb, Pec) electrically independent of each other.

15. A reflective display panel (10, 11, 12, 13, 13A, 13B, 14, 15, 15A, 16, 16A, 16B), comprising:
a pixel array substrate (100) provided with a plurality of display units (DU, DU-A, DU-B, DU-C, DU-D, DU-E, DU-F, DU-G, DU-G", DU1, DU2), wherein each of the display units (DU, DU-A, DU-B, DU-C, DU-D, DU-E, DU-F, DU-G, DU-G", DU1, DU2) comprises:
a first pixel electrode, a second pixel electrode, and a third pixel electrode each having a plurality of sub-electrodes (Pea, PEb, Pec) electrically independent of each other, wherein the second pixel electrode and the third pixel electrode are adjacent to at least one side of the first pixel electrode;
a color filter substrate provided with a plurality of filter patterns (FP), wherein three of the filter patterns (FP) respectively overlapping the first pixel electrode, the second pixel electrode, and the third pixel electrode of each of the display units (DU, DU-A, DU-B, DU-C, DU-D, DUE, DU-F, DU-G, DU-G", DU1, DU2) have different filter colors from each other;
a liquid crystal layer (LCL) disposed between the pixel array substrate (100) and the color filter substrate.

16. The reflective display panel (10, 11, 12, 13, 13A, 13B, 14, 15, 15A, 16, 16A, 16B) according to claim 15, wherein the pixel array substrate (100) is further provided with:
a plurality of data lines (DL) arranged along a first direction and extending in a second direction, wherein the first direction is perpendicular to the second direction; and
a plurality of scan lines (SL) arranged along the second direction and extending in the first direction, wherein the display units (DU, DU-A, DU-B, DU-C, DU-D, DU-E, DU-F, DU-G, DUG", DU1, DU2) comprise a first display unit and a second display unit arranged adjacently along the second direction, the first pixel electrode and the second pixel electrode of each of the display units (DU, DU-A, DU-B, DU-C, DU-D, DU-E, DU-F, DU-G, DU-G", DU1, DU2) are aligned and arranged along the first direction, and in the second direction, the first pixel electrode and the second pixel electrode of the first display unit are respectively aligned with the first pixel electrode and the second pixel electrode of the second display unit, and the third pixel electrode of the first display unit is staggered to the third pixel electrode of the second display unit.

17. The reflective display panel (10, 11, 12, 13, 13A, 13B, 14, 15, 15A, 16, 16A, 16B) according to claim 15, wherein the pixel array substrate (100) is further provided with:
a plurality of data lines (DL) arranged along a first direction and extending in a second direction, wherein the first direction is perpendicular to the second direction; and
a plurality of scan lines (SL) arranged along the second direction and extending in the first direction, wherein the display units (DU, DU-A, DU-B, DU-C, DU-D, DU-E, DU-F, DU-G, DUG", DU1, DU2) comprise a first display unit and a second display unit arranged adjacently along the first direction, the first pixel electrode and the second pixel electrode of each of the display units (DU, DU-A, DU-B, DU-C, DU-D, DU-E, DU-F, DU-G, DU-G", DU1, DU2) are aligned and arranged along the first direction, and in the second direction, the second pixel electrode of the first display unit is aligned with the third pixel electrode, and the first pixel electrode of the second display unit is aligned with the third pixel electrode.

18. The reflective display panel (10, 11, 12, 13, 13A, 13B, 14, 15, 15A, 16, 16A, 16B) according to claim 15, wherein an area of a reflective surface (RS) of one of the first pixel electrode, the second pixel electrode, and the third pixel electrode is different from an area of a reflective surface (RS) of another one of the first pixel electrode, the second pixel electrode, and the third pixel electrode.
